# EUROPEAN PATENT APPLICATION

(11) **EP 4 501 859 A1**
(43) Date of publication of application: **05.02.2025**
(21) Application number: 23807966.9
(22) Date of filing: 22.05.2023
(51) Int. Cl.: C01G 53/00, H01M 4/525, H01M 4/02

(54) **POSITIVE ELECTRODE ACTIVE MATERIAL PRECURSOR, METHOD FOR PREPARING POSITIVE ELECTRODE ACTIVE MATERIAL BY USING SAME, AND POSITIVE ELECTRODE ACTIVE MATERIAL**

(30) Priority: 20.05.2022 KR 20220062289
(71) Applicant: LG Chem, Ltd., Yeongdeungpo-gu Seoul 07336 (KR)
(72) Inventor: SEO, You Kyong, Daejeon 34122 (KR); JEONG, Myung Gi, Daejeon 34122 (KR); LEE, Ji Young, Daejeon 34122 (KR); RYU, Hyeon Mo, Daejeon 34122 (KR)
(74) Representative: Hoffmann Eitle
(86) International application number: PCT/KR2023/006943
(87) International publication number: WO 2023/224447

(57) **Abstract**

The present invention is an invention which relates to a positive electrode active material precursor capable of implementing a positive electrode active material in the form of a single particle even when heat-treated at a low temperature, and specifically, to a positive electrode active material precursor which includes a first positive electrode active material precursor having a composition represented by Formula 1 described herein and including a composite transition metal in the form of a single particle, and one or more of a second positive electrode active material precursor having a composition represented by Formula 2 described herein and a third positive electrode active material precursor having a composition represented by Formula 3 described herein, a method for preparing a positive electrode active material using the positive electrode active material precursor, and a positive electrode active material prepared by the method.

## Description

### TECHNICAL FIELD

### Cross-reference to Related Applications

This application claims the benefit of Korean Patent Application No. 10-2022-0062289, filed on May 20, 2022, in the Korean Intellectual Property Office, the disclosure of which is incorporated herein in its entirety by reference.

### Technical Field

The present invention relates to a positive electrode active material precursor, a method for preparing a positive electrode active material using the positive electrode active material precursor, and a positive electrode active material prepared by the method.

### BACKGROUND ART

In recent years, as the technology development and demand for mobile devices and electric vehicles have increased, the demand for secondary batteries as an energy source has been rapidly increased. Among such secondary batteries, lithium secondary batteries having high energy density and voltage, long cycle life, and low self-discharging rate have been commercialized and widely used.

As a positive electrode active material for a lithium secondary battery, lithium transition metal oxides such as a lithium cobalt oxide such as LiCoO₂, a lithium nickel oxide such as LiNiO₂, a lithium manganese oxide such as LiMnO₂ or LiMn₂O₄, a lithium iron phosphate oxide such as LiFePO₄, and the like have been developed, and in recent years, a lithium composite transition metal oxide including two or more types of transition metals such as Li[NiₐCo_{b}Mn_{c}]O₂, Li[NiₐCo_{b}Al_{c}]O₂, and Li[NiₐCo_{b}Mn_{c}Al_{d}]O₂ have been developed and widely used.

A lithium transition metal oxide developed to date is typically prepared by preparing a lithium transition metal hydroxide through a co-precipitation reaction performed by adding ammonia water as a chelating agent and a sodium hydroxide aqueous solution as a basic aqueous solution to solvent in which raw materials containing a transition metal, for example, nickel sulfate, cobalt sulfate, manganese sulfate, and the like are mixed, and then mixing the lithium transition metal hydroxide, a lithium-containing raw material, and selectively, a doping element-containing raw material, and the like, followed by performing high-temperature heat treatment.

When a lithium transition metal hydroxide is prepared as described above, a lithium transition metal hydroxide having the form of a spherical secondary particle formed by the agglomeration of primary particles of several nm to tens of nm is formed as a positive electrode active material precursor, and in order to prepare a positive electrode active material in the form of a single particle, high-temperature heat treatment at 830 °C or higher is required.

However, when high-temperature heat treatment at 830 °C or higher is performed to prepare a positive electrode active material in the form of a single particle, the layered structure of R-3m is not properly maintained and lithium is discharged out of the crystal structure, resulting in a phase change into an Fm-3m rock-salt structure such as NiO, thereby reducing the crystallinity of the positive electrode active material, so that there are problems in that the capacity properties and lifespan properties of a battery including the positive electrode active material are reduced, and the resistance increase rate increases. Meanwhile, when the heat treatment is performed at a temperature lower than 830 °C, there is a problem in that the effects of improving lifespan and reducing gas generation do not reach an expected level in the case of a single particle due to the presence of an over-fired secondary particle form.

Therefore, research has been conducted to attempt to develop a positive electrode active material precursor that does not require high-temperature heat treatment at 830°C or higher in order to increase the crystallinity of a positive electrode active material when preparing a positive electrode active material in the form of a single particle.

### DISCLOSURE OF THE INVENTION

### TECHNICAL PROBLEM

An aspect of the present invention provides a positive electrode active material precursor capable of implementing a positive electrode active material in the form of a single particle even when fired at a low temperature.

An aspect of the present invention also provides a method for preparing a positive electrode active material, the method capable of obtaining a positive electrode active material in the form of a single particle even when fired at a low temperature by using the positive electrode active material precursor when preparing the positive electrode active material.

### TECHNICAL SOLUTION

According to an aspect of the present invention, there are provided a positive electrode active material precursor, a method for preparing a positive electrode active material using the positive electrode active material precursor, and a positive electrode active material prepared by the method.
(1) The present invention provides a positive electrode active material precursor which includes a first positive electrode active material precursor having a composition represented by Formula 1 below, and including a composite transition metal in the form of a single particle, and one or more selected from a second positive electrode active material precursor having a composition represented by Formula 2 below and a third positive electrode active material precursor having a composition represented by Formula 3 below.
[Formula 1] Niₐ₁M¹_{b1}Mn_{c1}M²_{d1}

In Formula 1 above,
M¹ is one or more selected from Co and Al,
M² is one or more selected from Nb, Ti, Mg, Ta, Zr, Ca, Mo, V, Y, W, and Sc, and
0.6≤a1<1, 0<b1≤0.4, 0≤c1≤0.4, and 0≤d1≤0.2, and

   [Formula 2] M³ₐ₂M⁴_{b2}(OH)_{c2}

In Formula 2 above,
M³ is one or more selected from Ni, Co, Mn, Al, and Zr,
M⁴ is one or more selected from Nb, Ti, Mg, Ta, Ca, Mo, V, Y, W, and Sc, and
0<a2≤1, 0≤b2<1, and 2≤c2≤4, and

   [Formula 3] M⁵ₐ₃M⁶_{b3}O_{c3}

In Formula 3 above,
M⁵ is one or more selected from Ni, Co, Mn, Al, and Zr,
M⁶ is one or more selected from Nb, Ti, Mg, Ta, Ca, Mo, V, Y, W, and Sc, and
0<a3≤3, 0≤b3<3, and 1≤c3≤4.

(2) In (1) above, the present invention provides a positive electrode active material precursor, wherein the first positive electrode active material precursor has an average particle diameter (D₅₀) of 0.1 um to 15 µm.
(3) In (1) or (2) above, the present invention provides a positive electrode active material precursor, wherein the first positive electrode active material precursor has a face-centered cubic crystal structure.
(4) In any one of (1) to (3) above, the present invention provides a positive electrode active material precursor, wherein the second positive electrode active material precursor is in the form of a secondary particle, in the form of a single particle, or amorphous.
(5) In any one of (1) to (4) above, the present invention provides a positive electrode active material precursor, wherein the second positive electrode active material precursor has an average particle diameter (D₅₀) of 0.01 um to 10 µm.
(6) In any one of (1) to (5) above, the present invention provides a positive electrode active material precursor, wherein the third positive electrode active material precursor is in the form of a secondary particle, in the form of a single particle, or amorphous.
(7) In any one of (1) to (6) above, the present invention provides a positive electrode active material precursor, wherein the third positive electrode active material precursor has an average particle diameter (D₅₀) of 0.01 um to 10 µm.
(8) In any one of (1) to (7) above, the present invention provides a positive electrode active material precursor, wherein the positive electrode active material precursor includes one or more selected from the second positive electrode active material precursor and the third positive electrode active material precursor in an amount of 0.5 parts by weight to 5 parts by weight based on 100 parts by weight of the first positive electrode active material precursor.
(9) The present invention provides a method for preparing a positive electrode active material including mixing the positive electrode active material precursor according to any one of (1) to (8) and a lithium-containing raw material, and then firing the mixture at a temperature of 700 °C to lower than 830 °C, thereby obtaining a lithium transition metal oxide in the form of a single particle.
(10) The present invention provides a positive electrode active material in the form of a single particle, which is prepared by the preparation method according to (9) above, and has an average particle diameter (D₅₀) of 3 um to 12 µm.
(11) In (10) above, the present invention provides a positive electrode active material in the form of a single particle, which has an average particle diameter (D₅₀) of 4 um to 8 µm.

### ADVANTAGEOUS EFFECTS

A positive electrode active material precursor according to the present invention uses a mixture of a first positive electrode active material precursor including a composite transition metal in the form of a single particle and a second positive electrode active material precursor and/or a third positive electrode active material precursor, so that it is possible to obtain a positive electrode active material in the form of a single particle even when the positive electrode active material precursor is fired at a temperature relatively lower than a temperature typically required to form a single particle when preparing a positive electrode active material.

When a positive electrode active material prepared by a method for preparing a positive electrode active material according to the present invention is applied to a secondary battery, it is possible to implement excellent capacity properties, lifespan properties, resistance properties, and significant gas generation reduction effects.

### BRIEF DESCRIPTION OF THE INVENTION

FIG. 1 is SEM images of the first positive electrode active material precursor used in Example 1.
FIG. 2 is SEM images of the nickel-cobalt-manganese hydroxide used in Comparative Example 1.
FIG. 3 is SEM images of the nickel-cobalt-manganese oxide used in Comparative Example 2.
FIG. 4 is a volume cumulative particle size graph of the positive electrode active materials prepared in Example 1 and Comparative Examples 1 and 2.
FIG. 5 is SEM images of the positive electrode active materials prepared in (A) Example 1, (B) Comparative Example 1, and (C) Comparative Example 2.
FIG. 6 is XRD data of the positive electrode active materials prepared in Example 1 and Comparative Example 1.
FIG. 7 is XRD data of the first positive electrode active material precursor and the third positive electrode active material precursor used in Example 1.
FIG. 8 is EDS data of the first positive electrode active material precursor used in Example 1.

### BEST MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

In the present specification, an average particle diameter (D₅₀) refers to a particle size based on 50% of a volume cumulative particle size distribution of a positive electrode active material precursor, or positive electrode active material or lithium transition metal oxide powder. The average particle diameter (D₅₀) may be measured by a laser diffraction method. For example, the average particle diameter (D₅₀) may be measured by dispersing positive electrode active material powder in a dispersion medium, and then introducing the mixture into a commercially available laser diffraction particle size measurement device (e.g., Microtrac MT 3000) to be irradiated with an ultrasonic wave of about 28 kHz to an output of 60W, thereby obtaining a volume cumulative particle size distribution graph, and then obtaining a particle size corresponding to 50% of a volume cumulative amount.

In the present specification, the term "on" includes not only a case in which a certain component is formed directly on an upper surface of another component, but also a case in which a third component is interposed therebetween.

In the present specification, a single particle form is a concept in contrast to a spherical secondary particle form formed by the agglomeration of tens to hundreds of primary particles prepared by a typical method, which is a form in which each particle is separated and/or dispersed from each other to form an independent and/or separate phase, but may also include a form in which two to ten particles, or two to five particles are attached to each other, and the like.

Hereinafter, the present invention will be described in detail.

### Positive electrode active material precursor

A positive electrode active material precursor according to the present invention includes a first positive electrode active material precursor having a composition represented by Formula 1 below, and including a composite transition metal in the form of a single particle, and one or more selected from a second positive electrode active material precursor having a composition represented by Formula 2 below and a third positive electrode active material precursor having a composition represented by Formula 3 below.

[Formula 1] Niₐ₁M¹_{b1}Mn_{c1}M²_{d1}

In Formula 1 above,
M¹ is one or more selected from Co and Al,
M² is one or more selected from Nb, Ti, Mg, Ta, Zr, Ca, Mo, V, Y, W, and Sc, and
0.6≤a1<1, 0<b1≤0.4, 0≤c1≤0.4, and 0≤d1≤0.2, and

   [Formula 2] M³ₐ₂M⁴_{b2}(OH)_{c2}

In Formula 2 above,
M³ is one or more selected from Ni, Co, Mn, Al, and Zr,
M⁴ is one or more selected from Nb, Ti, Mg, Ta, Ca, Mo, V, Y, W, and Sc, and
0<a2≤1, 0≤b2<1, and 2≤c2≤4, and

   [Formula 3] M⁵ₐ₃M⁶_{b3}O_{c3}

In Formula 3 above,
M⁵ is one or more selected from Ni, Co, Mn, Al, and Zr,
M⁶ is one or more selected from Nb, Ti, Mg, Ta, Ca, Mo, V, Y, W, and Sc, and
0<a3≤3, 0≤b3<3, and 1≤c3≤4.

The present inventors have repeatedly conducted research on the development of a positive electrode active material capable of implementing excellent lifespan properties and resistance properties, and have found that when a first positive electrode active material precursor, which is a composite transition metal in the form of a single particle, and a transition metal hydroxide and/or a transition metal oxide are mixed and used as a positive electrode active material precursor, a positive electrode active material with a high degree of single-particleization capable of implementing excellent lifespan properties and resistance properties may be prepared even when the positive electrode active material precursor is fired at a relatively low temperature, and have completed the present invention.

First, when a typical positive electrode active material precursor having a secondary particle form formed by the agglomeration of primary particles is used, high-temperature firing at 830 °C or higher is required to prepare a positive electrode active material in the form of a single particle, but when a positive electrode active material precursor including a first positive electrode active material precursor, which is a composite transition metal in the form of a single particle, and a transition metal hydroxide (a second positive electrode active material precursor) and/or a transition metal oxide (a third positive electrode active material precursor) is used as in the present invention, there is an advantage in that a positive electrode active material in the form of a single particle may be prepared even through firing at lower than 830 °C. Accordingly, a phase change into a rock-salt structure of a NiO phase, which may occur when high-temperature firing at 830 °C or higher is performed, and the like do not occur, so that a positive electrode active material with excellent performance may be prepared.

In addition, the positive electrode active material precursor according to the present invention includes an isotropic composite transition metal, and thus, is easily formed into a single particle since a particle evenly grows regardless of a growth direction.

According to the present invention, the first positive electrode active material precursor may be a composite transition metal itself in the form of a single particle having a composition represented by Formula 1 above. Meanwhile, the first positive electrode active material precursor may be one in which the surface of a composite transition metal in the form of a single particle having a composition represented by Formula 1 below reacts with oxygen or moisture in the atmosphere and surface-modified with an oxide or hydrate.

In Formula 1 above,
the a1 represents the atomic fraction of nickel among metal elements in the first positive electrode active material precursor, and may satisfy 0.6≤a1<1, 0.6≤a1≤0.98, or 0.7≤a1≤0.95,
the b1 represents the atomic fraction of an M¹ element among metal elements in the first positive electrode active material precursor, and may satisfy 0<b1≤0.4, 0.01≤b1≤0.4, or 0.01≤b1≤0.3,
the c1 represents the atomic fraction of manganese among metal elements in the first positive electrode active material precursor, and may satisfy 0≤c1≤0.4, 0.01≤c1≤0.4, or 0.01≤c1≤0.3, and
the d1 represents the atomic fraction of an M² element among metal elements in the first positive electrode active material precursor, and may satisfy 0<d1≤0.4, 0≤d1≤0.4, or 0≤d1≤0.05.
The first positive electrode active material precursor may include nickel and cobalt in terms of improving resistance properties of a battery. For example, the first positive electrode active material precursor may have a composition represented by Formula 1-1 below.
[Formula 1-1] Niₐ₁Coₓ₁Al_{y1}Mn_{c1}M²_{d1}

In Formula 1- 1 above,
M² is one or more selected from Nb, Ti, Mg, Ta, Zr, W, and Sc, and
0.6≤a1<1, 0<x1≤0.4, 0≤y1≤0.4, 0≤c1≤0.4, and 0≤d1≤0.2.

Meanwhile, the first positive electrode active material precursor may be a composite transition metal itself in the form of a single particle having a composition represented by Formula 1 below. In addition, the first positive electrode active material precursor may be one in which the surface of a composite transition metal in the form of a single particle having a composition represented by Formula 1 below reacts with oxygen or moisture in the atmosphere and surface-modified with an oxide or hydrate.

According to the present invention, the first positive electrode active material precursor may have an average particle diameter (D₅₀) of 0.1 um to 15 um. Specifically, the first positive electrode active material precursor may have an average particle diameter (D₅₀) of 0.1 um, 2 um, 3 µm. 5 um or greater, 10 um, 12 um, or 15 um or less. When the average particle diameter of the first positive electrode active material precursor is within the above range, the number of lithium paths in contact with an electrolyte solution increases, resulting in an increase in the number of lithium ions which can be reversibly used, so that high capacity and output properties may be exhibited.

According to the present invention, the first positive electrode active material precursor may have a face-centered cubic structure. When the crystal structure of a first positive electrode active material precursor has a face-centered cubic structure, due to the properties of a close-packed face-centered cubic structure, it is possible to prepare a positive electrode active material in a large amount with a small volume and weight of the precursor, so that the processability may be improved.

The second positive electrode active material precursor may be Ni(OH)₂, Co(OH)₂, Zr(OH)₄, Al(OH)₃, or a combination thereof, in terms of improving the reactivity of a first positive electrode active material precursor, which is low.

According to the present invention, the second positive electrode active material precursor may be in the form of a secondary particle, in the form of a single particle, or amorphous.

According to the present invention, the second positive electrode active material precursor may have an average particle diameter (D₅₀) of 0.01 um to 10 um. Specifically, the second positive electrode active material precursor may have an average particle diameter (D₅₀) of 0.01 um, 0.1 um, 1 um or greater, 2 um, 4 um, or 10 um or less. When the average particle diameter of the second positive electrode active material precursor is within the above range, the reactivity with the first positive electrode active material precursor may be maximized.

The third positive electrode active material precursor may specifically be NiO, Co₃O₄, MnO₂, ZrO₂, Al₂O₃, or a combination thereof, in terms of improving the reactivity of a first positive electrode active material precursor, which is low.

According to the present invention, the third positive electrode active material precursor may be in the form of a secondary particle, in the form of a single particle, or amorphous.

According to the present invention, the third positive electrode active material precursor may have an average particle diameter (D₅₀) of 0.01 um to 10 um. Specifically, the third positive electrode active material precursor may have an average particle diameter (D₅₀) of 0.01 um, 0.1 um, 1 um or greater, 2 um, 4 um, or 10 um or less. When the average particle diameter of the third positive electrode active material precursor is within the above range, the reactivity with the first positive electrode active material precursor may be maximized.

According to the present invention, the positive electrode active material precursor may include one or more selected from the second positive electrode active material precursor and the third positive electrode active material precursor in an amount of 0.5 parts by weight to 5 parts by weight based on 100 parts by weight of the first positive electrode active material precursor.

### Method for preparing positive electrode active material

A method for preparing a positive electrode active material according to the present invention includes mixing the positive electrode active material precursor according to the present invention and a lithium-containing raw material, and then firing the mixture at a temperature of 700 °C to lower than 830 °C, thereby obtaining a lithium transition metal oxide in the form of a single particle. The method for preparing a positive electrode active material may prepare a positive electrode active material doped with a doping element by mixing and firing a doping element-containing raw material together when mixing the positive electrode active material precursor and the lithium-containing raw material. In addition, the method for preparing a positive electrode active material may prepare a positive electrode active material in which a coating layer is formed on the lithium transition metal oxide by mixing the prepared lithium transition metal oxide in the form of a single particle with a coating element-containing raw material and heat treating the mixture.

In a method for preparing a positive electrode active material using a typical positive electrode active material precursor, high-temperature firing at 830 °C or higher has been required to obtain a positive electrode active material in the form of a single particle. However, according to the present invention, since a positive electrode active material precursor including a first positive electrode active material precursor, which is a composite transition metal in the form of a single particle, and a transition metal hydroxide (a second positive electrode active material precursor) and/or a transition metal oxide (a third positive electrode active material precursor) is used when preparing a positive electrode active material, a positive electrode active material in the form of a single particle may be obtained even when the positive electrode active material precursor is fired at a low temperature of 700 °C to lower than 830 °C. That is, a positive electrode active material in the form of a single particle may be obtained even when the positive electrode active material precursor is fired at a relatively low temperature of 700 °C to lower than 830 °C instead of performing high-temperature firing at 830 °C or higher thereon.

The method for preparing a positive electrode active material according to the present invention may include mixing the positive electrode active material precursor according to the present invention, a lithium-containing raw material, and selectively, further mixing a doping element-containing raw material, and the like, and then performing primary firing on the mixture at a temperature of 700 °C to lower than 830 °C, thereby obtaining a first fired product, and mixing the first fired product, a lithium-containing raw material, and selectively, further mixing a doping element-containing raw material and the like, and then performing secondary firing on the mixture at a temperature of 700 °C to 800 °C to obtain a second fired product. When firing is performed in two stages, a region in which the crystallinity is deteriorated due to high-temperature firing during primary firing may be recovered in secondary firing.

The method for preparing a positive electrode active material may further include mixing the second fired product and a coating element-containing raw material, and then heat treating the mixture at a temperature of 500 °C to 750 °C to form a coating layer on a lithium transition metal oxide in the form of a single particle. When the method for preparing a positive electrode active material further includes the forming of a coating layer, there is an advantage in that a deteriorated surface may be further improved.

The lithium-containing raw material may include one or more selected from lithium hydroxide hydrate, lithium carbonate, lithium nitrate, and lithium oxide. The lithium-containing raw material may be, specifically, lithium hydroxide hydrate, and more specifically, LiOH·H₂O. In this case, the reactivity between a precursor having a high atomic fraction of nickel among metal elements in the precursor and a lithium-containing raw material may be improved.

When preparing a positive electrode active material, the positive electrode active material precursor and the lithium-containing raw material may be mixed such that the molar ratio (M:Li) of a transition metal M (e.g., Ni+Co+Al, and Ni+Co+Mn+Al) contained in the positive electrode active material precursor and lithium (Li) contained in the lithium-containing raw material is to be 1:1.02 to 1:1.2, specifically 1:1.02 to 1:1.1, and more specifically 1:1.02 to 1:1.07. In this case, the capacity of the prepared positive electrode active material is improved, and unreacted Li does not remain as a by-product, so that the separation (which causes the positive electrode active material to coalesce) of positive electrode active material particles after the firing may not occur.

When the firing is performed in two stages as described above, in a primary firing step, a positive electrode active material precursor and a lithium-containing raw material may be mixed such that the molar ratio (M:Li) of a transition metal M (e.g., Ni+Co+Al, and Ni+Co+Mn+Al) contained in the positive electrode active material precursor and lithium (Li) contained in the lithium-containing raw material is to be 1:0.9 to 1:1.2, specifically 1:0.95 to 1:1.1, and more specifically 1:0.98 to 1:1.02. In addition, in the secondary firing step, a first fired product and a lithium-containing raw material may be mixed such that the molar ratio of a transition metal contained in the first fired product and lithium contained the lithium-containing raw material is to be 1:0.01 to 1:0.07, and more specifically 1:0.03 to 1:0.05.

The firing temperature may be 700 °C to lower than 830 °C. Specifically, the firing temperature may be 700 °C, 720 °C, 750 °C or higher, equal to or lower than 820 °C, or lower than 830 °C. When the firing temperature is within the above range, the crystallinity of particles may be increased, the phenomenon in which Ni²⁺ ions enter a Li layer may be suppressed, and the conductivity of lithium ions may be improved. Accordingly, when applied to a battery, excellent electrochemical properties may be implemented.

The firing may be performed in an oxygen atmosphere. In this case, the crystallinity of the positive electrode active material may be increased by increasing reactivity, uniformly firing particles, and preventing nickel from being reduced, thereby well maintaining Ni³⁺, which is advantageous for forming a R-3m layered structure, during a firing interval.

The firing may be performed for 5 hours to 20 hours. Specifically, the firing may be performed for 8 hours, 10 hours, 15 hours or more, 16 hours, or 20 hours or less. When the firing duration is within the above range, there are effects in that a lithium source reacts for a sufficient period of time, thereby increasing crystallinity through rearrangement of atoms, and internal defects of a single particle are decreased.

The positive electrode active material prepared by the method for preparing a positive electrode active material is a lithium transition metal oxide in the form of a single particle, and may have a composition represented by Formula 4 below.

[Formula 4] Liₓ[Niₐ₄M¹_{b4}Mn_{c4}M⁷_{d4}]O_{2-y}A_{y}

In Formula 4 above,
M¹ is one or more selected from Co and Al,
M⁷ is one or more selected from B, Mg, Ca, Ti, V, Cr, Fe, Zn, Ga, Y, Zr, Nb, Mo, Ta, Sc, and W,
A is one or more selected from F, Cl, Br, I, At, and S, and
0.9≤x≤1.2, 0.6≤a4<1, 0<b4≤0.4, 0≤c4≤0.4, 0≤d4≤0.2, a4+b4+c4+d4=1, and 0≤y≤0.2.

The a4 represents the atomic fraction of nickel among metal elements other than lithium in the positive electrode active material, and may satisfy 0.6≤a4<1, 0.6≤a4≤0.98, or 0.7≤a4≤0.95.

The b4 represents the atomic fraction of an M¹ element among metal elements other than lithium in the positive electrode active material, and may satisfy 0<b4≤0.4, 0.01≤b4≤0.4, or 0.01≤b4≤0.3.

The c4 represents the atomic fraction of manganese among metal elements other than lithium in the positive electrode active material, and may satisfy 0≤c4≤0.4, 0.01≤c4≤0.4, or 0.01≤c4≤0.3.

The d4 represents the atomic fraction of an M⁷ element among metal elements other than lithium in the positive electrode active material, and may satisfy 0≤d4≤0.2, 0≤d4≤0.1, or 0≤d4≤0.05.

According to the present invention, the positive electrode active material may include nickel and cobalt. For example, the positive electrode active material may have a composition represented by Formula 4-1 below.

[Formula 4-1] Liₓ[Niₐ₄Co_{x'}Al_{y'}Mn_{c4}M⁷_{d4}]O_{2-y}A_{y}

In Formula 4-1 above,
M⁷ is one or more selected from B, Mg, Ca, Ti, V, Cr, Fe, Zn, Ga, Y, Zr, Nb, Mo, Ta, Sc, and W,
A is one or more selected from F, Cl, Br, I, At, and S, and
0.9≤x≤1.2, 0.6≤a4<1, 0<x'≤0.4, 0≤y'≤0.4, 0≤c4≤0.4, 0≤d4≤0.2, a4+x'+y'+c4+d4=1, and 0≤y≤0.2.

According to the present invention, the positive electrode active material prepared according to the method for preparing a positive electrode active material may be a positive electrode active material in the form of a single particle having an average particle diameter (D₅₀) of 3 um to 12 um. Specifically, the positive electrode active material prepared according to the method for preparing a positive electrode active material may have an average particle diameter (D₅₀) of 3 um, 4 um, 5 um or greater, 8 µm, 10 um, or 12 um or less. In this case, the electrochemical properties of a battery including the positive electrode active material may be improved.

Meanwhile, when a transition metal cation similar in size to a lithium ion (Li⁺) is present in a lithium transition metal oxide, a phenomenon in which the transition metal cation is incorporated into a lithium layer occurs, which is referred to as a cation mixing phenomenon. In the case of a lithium nickel cobalt-based oxide, the cation mixing is less likely to occur since an ion such as Ni³⁺, Co³⁺, or the like is largely different in size from Li⁺. However, among nickel ions, an Ni²⁺ ion having an oxidation number of +2 is similar in size to a lithium ion, so that the cation mixing may easily occur. When Ni²⁺ ions are mixed in a lithium layer, a layered crystal structure is not properly developed, so that the structural stability of an active material is deteriorated, and the migration of lithium ions is inhibited by the Ni²⁺ ions present in the lithium layer, so that battery performance is degraded. Particularly, when the positive electrode active material precursor is fired at a high temperature of 830°C or higher, the rate at which a phase transition occurs from a layered structure of stable LiNO₂ to a NiO phase increases, and the degree of cation mixing tends to increase remarkably. However, the positive electrode active material prepared according to the method for preparing a positive electrode active material of the present invention may be fired at a temperature of lower than 830 °C, thereby forming a single particle, and at the same time, suppressing the above-described phase transition, so that a positive electrode active material having a high degree of single-particleization, a low degree of cation mixing, and high crystallinity may be obtained. Specifically, the degree of cation mixing may be equal to or less than 1%. Therefore, a battery including the positive electrode active material prepared according to the method for preparing a positive electrode active material may implement excellent electrochemical performance.

### Positive electrode

In addition, the present invention may provide a positive electrode for a lithium secondary battery, the positive electrode including a positive electrode active material prepared by the method described above.

Specifically, the positive electrode includes a positive electrode current collector and a positive electrode active material layer formed on at least one surface of the positive electrode current collector and including the above-described positive electrode active material.

The positive electrode current collector is not particularly limited as long as it has conductivity without causing a chemical change in a battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 um to 500 µm, and microscopic irregularities may be formed on the surface of the current collector to improve the adhesion of the positive electrode active material. For example, the positive electrode current collector may be used in various forms such as a film, a sheet, a foil, a net, a porous body, a foam, a non-woven body, and the like.

The positive electrode active material layer may include a conductive material and a binder, together with a positive electrode active material.

The positive electrode active material may be included in an amount wt% of 80 wt% to 99 wt%, more specifically 85 wt% to 98 wt% based on the total weight of the positive electrode active material layer. When included in the above content range, excellent capacity properties may be exhibited.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, KETJEN BLACK, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 1 wt% to 30 wt% based on the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be manufactured according to a typical method for manufacturing a positive electrode except that the positive electrode active material described above is used. Specifically, the positive electrode may be manufactured by applying a composition for forming a positive electrode active material layer, which is prepared by dissolving or dispersing the positive electrode active material described above and selectively, a binder and a conductive material in a solvent, on a positive electrode current collector, followed by drying and roll-pressing. At this time, the type and content of the positive electrode active material, the binder, and the conductive material are as described above.

The solvent may be a solvent commonly used in the art, and may be dimethyl sulfoxide (DMSO), isopropyl alcohol, N-methylpyrrolidone (NMP), acetone, water, or the like. Any one thereof or a mixture of two or more thereof may be used. The amount of the solvent to be used is sufficient if the solvent dissolves or disperses the positive electrode active material, the conductive material, and the binder in consideration of the application thickness and preparation yield of a composition for forming an active material layer, and thereafter, allows the composition to have a viscosity capable of exhibiting excellent thickness uniformity when applied for manufacturing the positive electrode.

In addition, in another method, the positive electrode may be manufactured by casting the composition for forming a positive electrode active material layer on a separate support and then laminating a film obtained by being peeled off from the support on a positive electrode current collector.

### Lithium secondary battery

In addition, the present invention may manufacture an electrochemical device including the positive electrode. Specifically, the electrochemical device may be a battery, a capacitor, or the like, and more specifically, may be a lithium secondary battery.

Specifically, the lithium secondary battery includes a positive electrode, a negative electrode positioned opposing the positive electrode, a separator interposed between the positive electrode and the negative electrode, and an electrolyte, and since the positive electrode is the same as described above, a detailed description thereof will be omitted, and hereinafter, only the rest of the components will be described in detail.

Also, the lithium secondary battery may selectively further include a battery case for accommodating an electrode assembly composed of the positive electrode, the negative electrode, and the separator, and a sealing member for sealing the battery case.

In the above lithium secondary battery, the negative electrode includes a negative electrode current collector and a negative electrode active material layer positioned on the negative electrode current collector.

The negative electrode current collector is not particularly limited as long as it has a high conductivity without causing a chemical change in a battery. For example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 um to 500 µm, and as in the case of the positive electrode current collector, microscopic irregularities may be formed on the surface of the negative electrode current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive material in addition to a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, or amorphous carbon; a metallic compound alloyable with lithium such as Si, Al, Sn, Pb, Zn, Bi, In, Mg, Ga, Cd, an Si alloy, an Sn alloy, or an Al alloy; a metal oxide capable of doping and undoping lithium such as SiO_{β}(0<β< 2), SnO₂, a vanadium oxide, or a lithium vanadium oxide; or a composite including the metallic compound and the carbonaceous material such as an Si-C composite or an Sn-C composite, and any one thereof or a mixture of two or more thereof may be used. Also, a metal lithium thin film may be used as the negative electrode active material. Furthermore, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature sintered carbon such as petroleum or coal tar pitch derived cokes.

The negative electrode active material layer may be included in an amount of 80 wt% to 99 wt% based on the total weight of the negative electrode active material layer.

The binder is a component for assisting in bonding between a conductive material, an active material, and a current collector, and may typically be added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of a negative electrode active material, and may be added in an amount of 10 wt% or less, specifically 5 wt% or less, based on the total weight of the negative electrode active material layer. The conductive material is not particularly limited as long as it has conductivity without causing a chemical change in the battery, and for example, graphite such as natural graphite or artificial graphite; carbon black such as acetylene black, KETJEN BLACK, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; and a conductive material such as a polyphenylene derivative, or the like may be used.

The negative electrode active material layer may prepared by applying a composition for forming a negative electrode active material layer, which is prepared by dissolving or dispersing a negative electrode active material and selectively a binder and a conductive material in a solvent, on a negative electrode current collector, followed by drying, or may be prepared by casting the composition for forming a negative electrode active material on a separate support, and then laminating a film peeled off from the support on a negative electrode current collector.

Meanwhile, in the above lithium secondary battery, the separator is to separate the negative electrode and the positive electrode and to provide a movement path for lithium ions, and any separator typically used as a separator in a lithium secondary battery may be used without particular limitation, and in particular, a separator having high moisture-retention capability for an electrolyte while having low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may selectively be used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, which may be used in the manufacturing of a lithium secondary battery, but is not limited thereto.

Specifically, the electrolyte may include an organic solvent and a lithium salt.

As the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above solvents, a carbonate-based solvent is preferable, and a mixture of a cyclic carbonate (e.g., ethylene carbonate or propylene carbonate) having a high ionic conductivity and a high dielectric constant, which may increase charging/discharging performance of the battery, and a low-viscosity linear carbonate-based compound (e.g., ethylmethyl carbonate, dimethyl carbonate, or diethyl carbonate) is more preferable. In this case, the performance of the electrolyte solution may be exhibited excellent when the cyclic carbonate and the chain carbonate are mixed in a volume ratio of about 1:1 to about 1:9.

As the lithium salt, any compound may be used without particular limitation as long as it can provide lithium ions used in a lithium secondary battery. Specifically, as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. At this time, the additive may be included in an amount of 0.1 wt% to 5 wt% based on the total weight of the electrolyte.

The lithium secondary battery including the positive electrode active material according to the present invention as describe above stably exhibits excellent discharging capacity, output properties, and lifespan properties, and thus, are useful for portable devices such as a mobile phone, a notebook computer, and a digital camera, and in the field of electric cars such as a hybrid electric vehicle (HEV).

Accordingly, a battery module including the lithium secondary battery as a unit cell, and a battery pack including the battery module are provided.

The battery module or the battery pack may be used as a power source of one or more medium-and-large-sized devices such as a power tool, an electric car including an electric vehicle (EV), a hybrid electric vehicle (HEV), and a plug-in hybrid electric vehicle (PHEV), or a power storage system.

The external shape of the lithium secondary battery of the present invention is not particularly limited, but may be have a cylindrical shape using a can, a square shape, a pouch shape, a coin shape, or the like.

The lithium secondary battery according to the present invention may be used in a battery cell used as a power source for a small device, and may also be preferably used as a unit cell in a medium-and-large-sized battery module including a plurality of battery cells.

### MODE FOR CARRYING OUT THE INVENTION

Hereinafter, embodiments of the present invention will be described in detail so that those skilled in the art may easily carry out the present invention. However, the present invention may be embodied in many different forms, and is not limited to the embodiments set forth herein.

### Examples and Comparative Examples

### Example 1

A positive electrode active material precursor including 80 g of a nickel cobalt alloy (Avention Co., Ltd.) (a first positive electrode active material precursor) having a composition of Ni_{0.96}Co_{0.04} and in the form of a single particle, 0.557 g of Al(OH)₃ (DAEJOO KC Co., Ltd.) (a second positive electrode active material precursor) in an atypical powder state, and 0.162 g of ZrO₂ (Guangdong Orient Zirconic Ind Sci&Tech Co., Ltd) (a third positive electrode active material precursor) in an atypical powder state, 0.102 g of Y₂O₃, and 59.89 g of LiOH·H₂O were prepared, and mixed such that the molar ratio of Ni+Co+Al:Li was 1:1, and the mixture was heated from room temperature to 810 °C at a temperature increase rate of 5 °C/min, and then subjected to primary firing at 810 °C for 6 hours to obtain a first fired product.

100 g of the first fired product, 0.479 g of Co(OH)₂ (Huayou Cobalt Co., Ltd.), and 1.730 g of LiOH·H₂O were prepared, and mixed such that the molar ratio of Ni+Co+Al:Li was 1:0.04, and the mixture was heated from room temperature to 760 °C at a temperature increase rate of 5 °C/min, and then subjected to secondary firing at 760 °C for 9 hours to obtain a second fired product.

100 g of the secondary fired product, 1.940 g of Co(OH)₂ (Huayou Cobalt Co., Ltd.), and 0.145 g of Al(OH)₃ (DAEJOO KC Co., Ltd.) were mixed, and the mixture was heated from room temperature to 700 °C at a temperature increase rate of 5 °C/min, subjected to heat treatment at 700 °C for 3 hours, and then subjected to heat treatment for 3 hours by lowering the temperature to 500 °C to prepare a lithium transition metal oxide (Li[Ni_{0.931}Co_{0.060}Al_{0.007}Zr_{0.001}Y_{0.001}]O₂) including a coating layer containing Co and Al and in the form of a single particle.

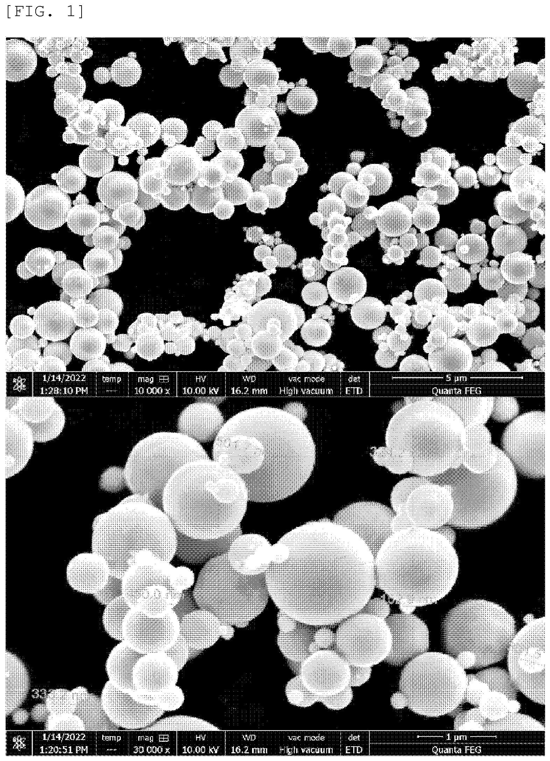

For reference, FIG. 1 shows SEM images of the nickel cobalt alloy (Avention Co., Ltd.) (the first positive electrode active material precursor) having a composition represented by Ni_{0.96}Co_{0.04} and in the form of a single particle. The average particle size (D₅₀) of the first positive electrode active material precursor is 3.09 µm.

### Example 2

A positive electrode active material precursor including 80 g of a nickel cobalt alloy (Avention Co., Ltd.) (a first positive electrode active material precursor) having a composition of Ni_{0.96}Co_{0.04} and in the form of a single particle and 0.557 g of Al(OH)₃ (DAEJOO KC Co., Ltd.) (a second positive electrode active material precursor) in an atypical powder state, and 59.89 g of LiOH·H₂O were prepared, and mixed such that the molar ratio of Ni+Co+Al:Li was 1:1, and the mixture was heated from room temperature to 810 °C at a temperature increase rate of 5 °C/min, and then subjected to primary firing at 810 °C for 6 hours to obtain a first fired product.

100 g of the first fired product, and 1.730 g of LiOH·H₂O were prepared, and mixed such that the molar ratio of Ni+Co+Al:Li was 1:0.04, and the mixture was heated from room temperature to 760 °C at a temperature increase rate of 5 °C/min, and then subjected to secondary firing at 760 °C for 9 hours to obtain a second fired product.

100 g of the secondary fired product, 1.940 g of Co(OH)₂ (Huayou Cobalt Co., Ltd.), and 0.145 g of Al(OH)₃ (DAEJOO KC Co., Ltd.) were mixed, and the mixture was heated from room temperature to 700 °C at a temperature increase rate of 5 °C/min, subjected to primary heat treatment at 700 °C for 3 hours, and then subjected to secondary heat treatment for 3 hours by lowering the temperature to 500 °C to prepare a lithium transition metal oxide (Li[Ni_{0.937}Co_{0.056}Al_{0.007}]O₂) including a coating layer containing Co and Al and in the form of a single particle.

### Example 3

A positive electrode active material precursor including 80 g of a nickel cobalt alloy (Avention Co., Ltd.) (a first positive electrode active material precursor) having a composition of Ni_{0.96}Co_{0.04} and in the form of a single particle and 0.557 g of Al(OH)₃ (DAEJOO KC Co., Ltd.) (a second positive electrode active material precursor) in an atypical powder state, and 59.89 g of LiOH·H₂O were prepared, and mixed such that the molar ratio of Ni+Co+Al:Li was 1:1, and the mixture was heated from room temperature to 810 °C at a temperature increase rate of 5 °C/min, and then subjected to primary firing at 810 °C for 6 hours to obtain a first fired product.

100 g of the first fired product, 0.479 g of Co(OH)₂ (Huayou Cobalt Co., Ltd.), and 1.730 g of LiOH·H₂O were prepared, and mixed such that the molar ratio of Ni+Co+Al:Li was 1:0.04, and the mixture was heated from room temperature to 760 °C at a temperature increase rate of 5 °C/min, and then subjected to secondary firing at 760 °C for 9 hours to obtain a second fired product.

100 g of the secondary fired product, 1.940 g of Co(OH)₂ (Huayou Cobalt Co., Ltd.), and 0.145 g of Al(OH)₃ (DAEJOO KC Co., Ltd.) were mixed, and the mixture was heated from room temperature to 700 °C at a temperature increase rate of 5 °C/min, subjected to primary heat treatment at 700 °C for 3 hours, and then subjected to secondary heat treatment for 3 hours by lowering the temperature to 500 °C to prepare a lithium transition metal oxide (Li[Ni_{0.933}Co_{0.060}Al_{0.007}]O₂) including a coating layer containing Co and Al and in the form of a single particle.

### Comparative Example 1

100 g of a spherical nickel cobalt manganese hydroxide (Huajin Co., Ltd.) having a Ni:Co:Mn molar ratio 95:3:2, 0.424 g of Al(OH)₃ (DAEJOO KC Co., Ltd.) in an atypical powder state, and 0.203 g of ZrO₂ (Guangdong Orient Zirconic Ind Sci&Tech Co., Ltd) in an atypical powder state, 0.127 g of Y₂O₃, and 45.52 g of LiOH·H₂O were prepared, and mixed such that the molar ratio of Ni+Co+Mn+Al:Li was 1:1, and the mixture was heated from room temperature to 830 °C at a temperature increase rate of 5 °C/min, and then subjected to primary firing at 830 °C for 6 hours to obtain a first fired product.

100 g of the first fired product, and 2.146 g of LiOH·H₂O were prepared, and mixed such that the molar ratio of Ni+Co+Mn+Al:Li was 1:0.05, and the mixture was heated from room temperature to 760 °C at a temperature increase rate of 5 °C/min, and then subjected to secondary firing at 760 °C for 9 hours to obtain a second fired product.

100 g of the secondary fired product, 1.940 g of Co(OH)₂ (Huayou Cobalt Co., Ltd.), and 0.145 g of Al(OH)₃ (DAEJOO KC Co., Ltd.) were mixed, and the mixture was heated from room temperature to 700 °C at a temperature increase rate of 5 °C/min, subjected to primary heat treatment at 700 °C for 3 hours, and then subjected to secondary heat treatment for 3 hours by lowering the temperature to 500 °C to prepare a lithium transition metal oxide (Li [Ni_{0.923}Co_{0.049}Mn_{0.019}Al_{0.007}Zr_{0.001}Y_{0.001}]O₂) including a coating layer containing Co and Al and in the form of a single particle.

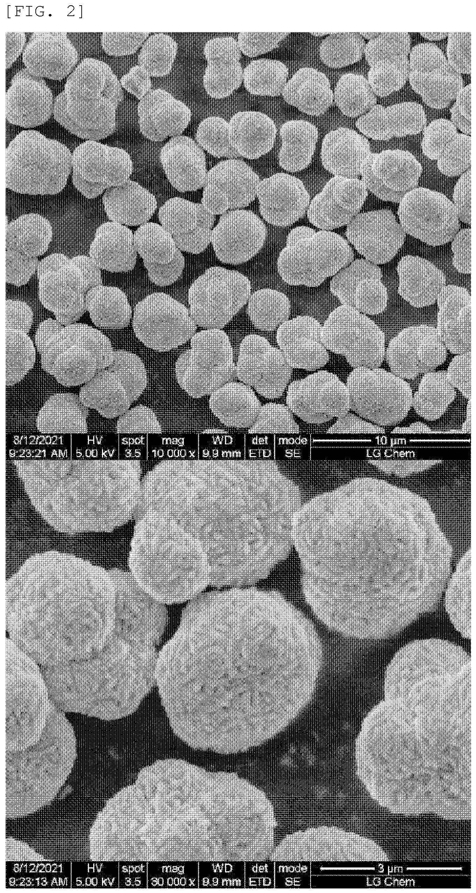

For reference, FIG. 2 shows SEM images of the spherical nickel cobalt manganese hydroxide (Huajin Co., Ltd.) having a Ni:Co:Mn molar ratio 95:3:2. The average particle diameter (D₅₀) of the nickel cobalt manganese hydroxide (Huajin Co., Ltd.) is 3.5 µm.

### Comparative Example 2

100 g of a spherical nickel cobalt manganese oxide (LG Chemical Co., Ltd.) having a Ni:Co:Mn molar ratio 96:3:1, 0.526 g of Al (OH)₃ (DAEJOO KC Co., Ltd.) in an atypical powder state, and 0.203 g of ZrO₂ (Guangdong Orient Zirconic Ind Sci&Tech Co., Ltd) in an atypical powder state, 0.127 g of Y₂O₃, and 56.486 g of LiOH·H₂O were prepared, and mixed such that the molar ratio of Ni+Co+Mn+Al:Li was 1:1, and the mixture was heated from room temperature to 830 °C at a temperature increase rate of 5 °C/min, and then subjected to primary firing at 830 °C for 12 hours to obtain a first fired product.

100 g of the first fired product, 0.479 g of Co(OH)₂ (Huayou Cobalt Co., Ltd.), and 1.730 g of LiOH·H₂O were prepared, and mixed such that the molar ratio of Ni+Co+Mn+Al:Li was 1:0.04, and the mixture was heated from room temperature to 760 °C at a temperature increase rate of 5 °C/min, and then subjected to secondary firing at 760 °C for 12 hours to obtain a second fired product.

100 g of the secondary fired product, 1.940 g of Co(OH)₂ (Huayou Cobalt Co., Ltd.), and 0.145 g of Al(OH)₃ (DAEJOO KC Co., Ltd.) were mixed, and the mixture was heated from room temperature to 700 °C at a temperature increase rate of 5 °C/min, subjected to primary heat treatment at 700 °C for 3 hours, and then subjected to secondary heat treatment for 3 hours by lowering the temperature to 500 °C to prepare a lithium transition metal oxide (Li [Ni_{0.932}Co_{0.049}Mn_{0.01}Al_{0.007}Zr_{0.001}Y_{0.001}]O₂) including a coating layer containing Co and Al and in the form of a single particle.

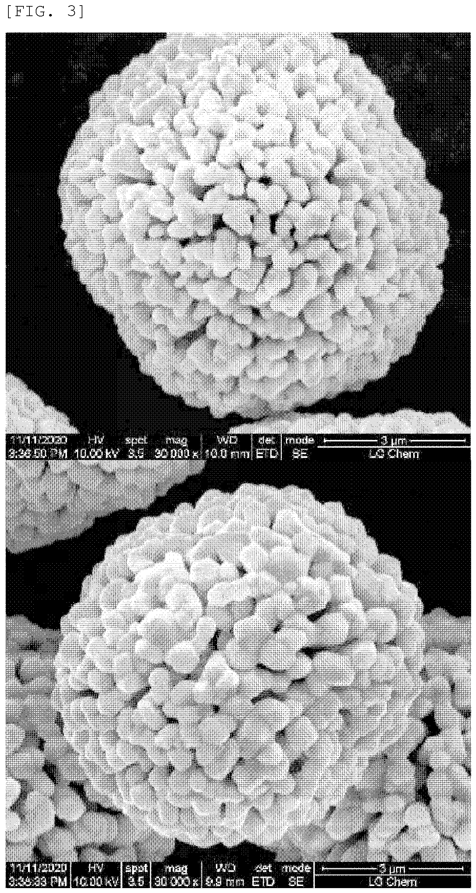

For reference, FIG. 3 shows SEM images of the spherical nickel cobalt manganese oxide (Avention Co., Ltd.) having a Ni:Co:Mn molar ratio 96:3:1. The average particle diameter (D₅₀) of the nickel cobalt manganese oxide (Avention Co., Ltd.) is 5.18 µm.

### Experimental Examples

### Experimental Example 1: Analysis of positive electrode active material precursor and positive electrode active material

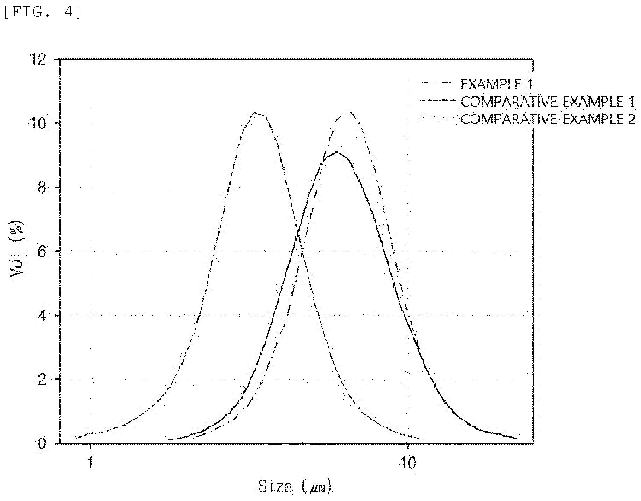

The volume cumulative particle size graph of the first positive electrode active material precursors used in Examples 1 to 3 and the positive electrode active materials prepared in Examples 1 to 3 and Comparative Examples 1 and 2 were obtained using a particle size measurement device (Microtrac Co., Ltd. S3500, Diffractive index = 1.55), and Dₘᵢₙ, D₅₀, Dₘₐₓ values obtained therefrom are shown in Table 1 below. FIG. 4 is the volume cumulative particle size graph of the positive electrode active materials prepared in Example 1 and Comparative Examples 1 and 2.

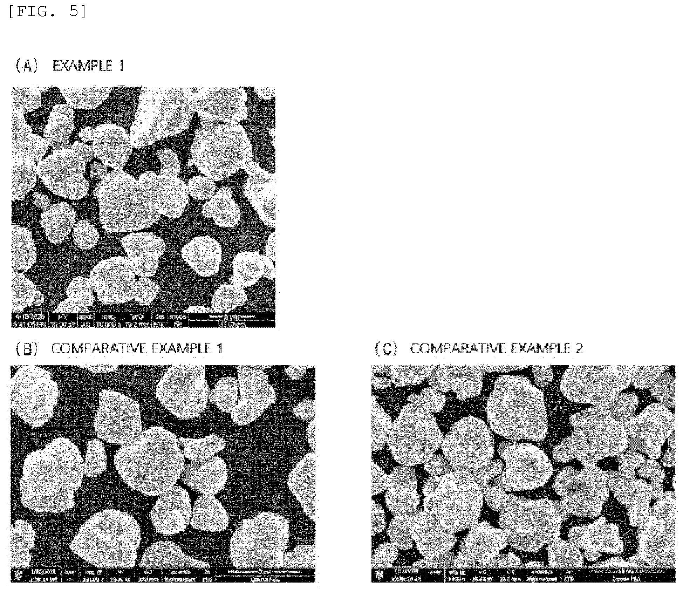

In addition, SEM images of the positive electrode active materials prepared in Example 1 and Comparative Examples 1 and 2 were measured using a scanning electron microscope (JEOL Co., Ltd.), and are shown in FIG. 5. Specifically, FIG. 5 (A) is an SEM image of the positive electrode active material prepared in Example 1, FIG. 5 (B) is an SEM image of the positive electrode active material prepared in Comparative Example 1, and FIG. 5 (C) is an SEM image of the positive electrode active material prepared in Comparative Example 2.

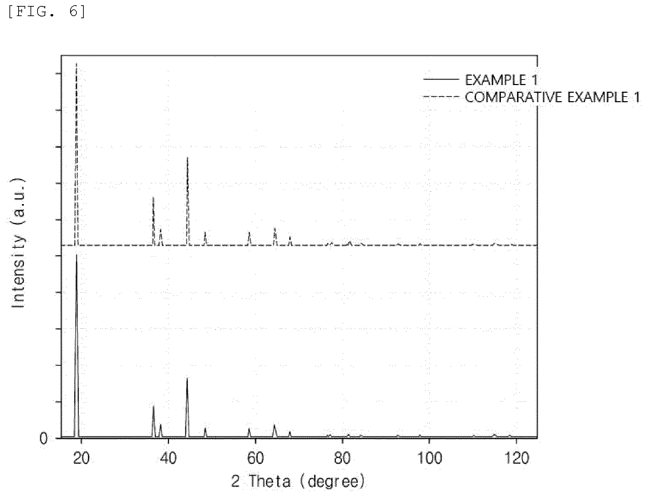

In addition, XRD data of the positive electrode active materials prepared in Example 1 and Comparative Example 1 were measured using XRD (Bruker Co., Ltd., D8 Endeavor, Cu Target), and are shown in FIG. 6. Referring to FIG. 6, it can be confirmed that a layered-type positive electrode active material is prepared even when the positive electrode active material precursor of Example 1 is mixed with a lithium-containing raw material and then fired.

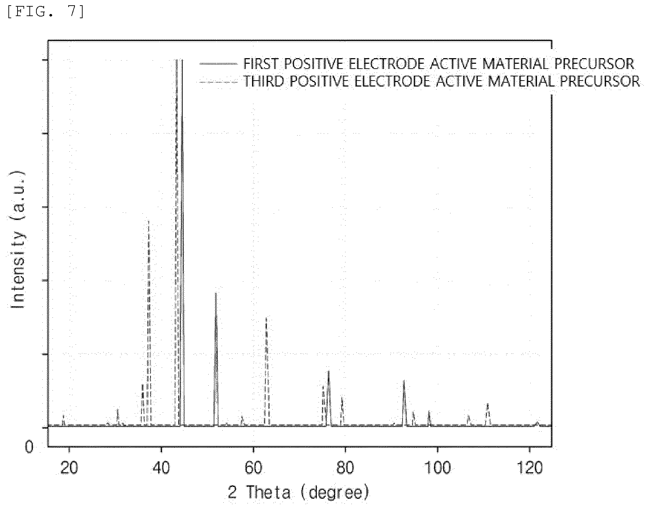

In addition, XRD data of the first positive electrode active material precursor and the third positive electrode active material precursor used in Example 1 were measured using XRD (Bruker Co., Ltd., D8 Endeavor, Cu Target), and are shown in FIG. 7. Referring to FIG. 7, it can be confirmed that the first positive electrode active material precursor has a space group of Fm-3M, and thus, is FCC (face-centered cubic), and that the third positive electrode active material precursor has Fm-3m and Fd-3m O₂ (spinel type) space groups, and thus, has a cubic crystal structure.

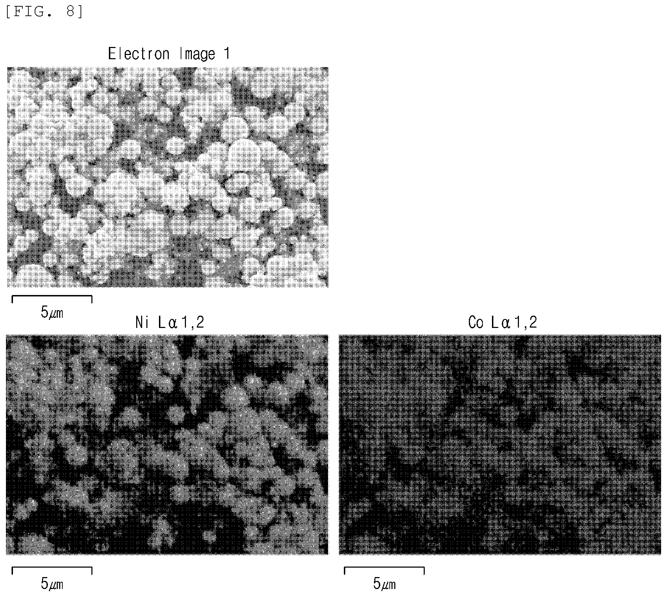

In addition, EDS data of the first positive electrode active material precursor used in Example 1 were measured using EDS (ThermoFisher Co., Ltd., Quanta 250 FEG), and are shown in FIG. 8. Referring to FIG. 8, it can be confirmed that the alloy precursor of Example 1 is a metal in which Ni and Co are mixed.

**[Table 1]**

| Classificati ons | First positive electrode active material precursor | Positive electrode active material | | |
|---|---|---|---|---|
| | D₅₀ (µm) | Dₘᵢₙ (µm) | D₅₀ (µm) | Dₘₐₓ (µm) |
| Example 1 | 3.09 | 1.783 | 5.82 | 22.00 |
| Example 2 | 3.09 | 1.945 | 5.78 | 22.00 |
| Example 3 | 3.09 | 2.121 | 5.76 | 22.00 |
| Comparative Example 1 | - | 0.892 | 3.22 | 11.00 |
| Comparative Example 2 | - | 1.375 | 6.25 | 22.00 |

### Experimental Example 2: Evaluation of capacity and resistance properties

Lithium secondary batteries were manufactured respectively using the positive electrode active materials prepared in Examples and Comparative Examples, and the initial charge capacity, initial discharge capacity, capacity retention rate, and resistance increase rate for each lithium secondary battery were evaluated.

The positive electrode active material prepared in each of Examples and Comparative Examples, a conductive material(FX35), and a binder (PVdF) were mixed at a weight ratio of 95:2:3 in a N-methyl-2-pyrrolidone (NMP) solvent to prepare a positive electrode slurry. The positive electrode slurry was applied on one surface of an aluminum current collector, dried, and then roll-pressed to manufacture a positive electrode. A separator was interposed between the positive electrode and a Li metal to manufacture an electrode assembly, and the electrode assembly was placed inside a battery case, followed by injecting an electrolyte solution thereto to manufacture a lithium secondary battery. At this time, as the electrolyte solution, an electrolyte solution in which 1 M of LiPF₆ was dissolved in an organic solvent in which ethylene carbonate:ethylmethyl carbonate:diethyl carbonate were mixed at a volume ratio of 3:3:4 was used.

Then, each of the secondary batteries was charged up to 4.25 V at 25 °C with a constant current of 0.2 C. Thereafter, discharge was performed up to 2.5 V with a constant current of 0.2 C to measure the initial charge capacity and initial discharge capacity. The results are shown in Table 2 below.

In addition, the capacity of the lithium secondary battery was measured by repeatedly performing 50 times of a charging and discharging cycle of charging the battery with a constant current of 0.5 C and discharging the battery at a constant current of 1 C at 45°C in the range of 2.5 V to 4.25 V, and particularly, the percentage (C₅₀/C₁×100) of the 50-th cycle discharge capacity (C₅₀) to the first cycle discharge capacity (C₁) was set as the capacity retention rate, and is shown in Table 2 below. In addition, the percentage (R₅₀/R₁×100) of DCIR(R₅₀) obtained by dividing a voltage drop(△V) for 60 seconds in the 50-th discharge cycle by a current to DCIR(R₁) obtained by dividing a voltage drop(ΔV) for 60 seconds in the first discharge cycle by a current was set as the resistance increase rate, and is shown in Table 2 below.

**[Table 2]**

| Classificat ions | Initial charge capacity (mAh/g) at 25 °C | Initial discharge capacity (mAh/g) at 25 °C | Capacity retention rate (%) at 45 °C | Resistance increase rate (%) at 45 °C |
|---|---|---|---|---|
| Example 1 | 244.1 | 205.7 | 94.9 | 147.9 |
| Example 2 | 243.8 | 204.2 | 95.1 | 148.2 |
| Example 3 | 245.5 | 204.1 | 95.01 | 145.2 |
| Comparative Example 1 | 243.6 | 208.9 | 95.03 | 141.2 |
| Comparative Example 2 | 240.2 | 206.6 | 95.27 | 167.3 |

Referring to Table 1 and FIG. 5, it can be confirmed that the positive electrode active material prepared using the positive electrode active material precursor according to the present invention has a large average particle diameter (D₅₀), and a high degree of single-particleization, and accordingly, it can be seen that the positive electrode active material precursor according to the present invention may be usefully used in preparing a medium-to-large-sized single particle. In addition, referring to Table 2, although each of the positive electrode active materials of Examples 1 to 3 was prepared by firing the precursor at a relatively lower temperature than in the case of the positive electrode active materials of Comparative Examples 1 and 2, it can be confirmed that single particles were well formed, and battery performance of an equivalent or excellent level was exhibited.

In conclusion, the positive electrode active material precursor according to the present invention uses a mixture of a first positive electrode active material precursor including a composite transition metal in the form of a single particle and a second positive electrode active material precursor and/or a third positive electrode active material precursor, so that it can be seen that it is possible to obtain a positive electrode active material in the form of a single particle even when the positive electrode active material precursor is fired at a temperature relatively lower than a temperature typically required to form a single particle when preparing a positive electrode active material. In addition, when the positive electrode active material prepared by the method for preparing a positive electrode active material according to the present invention is applied to a secondary battery, it can be seen that it is possible to implement excellent capacity properties, lifespan properties, resistance properties, and significant gas generation reduction effects.

## Claims

1. A positive electrode active material precursor comprising:
a first positive electrode active material precursor having a composition represented by Formula 1 below, and including a composite transition metal in the form of a single particle; and
one or more selected from a second positive electrode active material precursor having a composition represented by Formula 2 below and a third positive electrode active material precursor having a composition represented by Formula 3 below:
[Formula 1] Niₐ₁M¹_{b1}Mn_{c1}M²_{d1}
wherein in Formula 1 above,
M¹ is one or more selected from Co and Al,
M² is one or more selected from Nb, Ti, Mg, Ta, Zr, Ca, Mo, V, Y, W, and Sc, and
0.6≤a1<1, 0<b1≤0.4, 0≤c1≤0.4, and 0≤d1≤0.2, and
[Formula 2] M³ₐ₂M⁴_{b2}(OH)_{c2}
wherein in Formula 2 above,
M³ is one or more selected from Ni, Co, Mn, Al, and Zr,
M⁴ is one or more selected from Nb, Ti, Mg, Ta, Ca, Mo, V, Y, W, and Sc, and
0<a2≤1, 0≤b2<1, and 2≤c2≤4, and
[Formula 3] M⁵ₐ₃M⁶_{b3}O_{c3}
wherein in Formula 3 above,
M⁵ is one or more selected from Ni, Co, Mn, Al, and Zr,
M⁶ is one or more selected from Nb, Ti, Mg, Ta, Ca, Mo, V, Y, W, and Sc, and
0<a3≤3, 0≤b3<3, and 1≤c3≤4.

2. The positive electrode active material precursor of claim 1, wherein the first positive electrode active material precursor has an average particle diameter (D₅₀) of 0.1 um to 15 um.

3. The positive electrode active material precursor of claim 1, wherein the first positive electrode active material precursor has a face-centered cubic crystal structure.

4. The positive electrode active material precursor of claim 1, wherein the second positive electrode active material precursor is in the form of a secondary particle, in the form of a single particle, or amorphous.

5. The positive electrode active material precursor of claim 1, wherein the second positive electrode active material precursor has an average particle diameter (D₅₀) of 0.01 um to 10 um.

6. The positive electrode active material precursor of claim 1, wherein the third positive electrode active material precursor is in the form of a secondary particle, in the form of a single particle, or amorphous.

7. The positive electrode active material precursor of claim 1, wherein the third positive electrode active material precursor has an average particle diameter (D₅₀) of 0.01 um to 10 um.

8. The positive electrode active material precursor of claim 1, wherein the positive electrode active material precursor comprises one or more selected from the second positive electrode active material precursor and the third positive electrode active material precursor in an amount of 0.5 parts by weight to 5 parts by weight based on 100 parts by weight of the first positive electrode active material precursor.

9. A method for preparing a positive electrode active material comprising mixing the positive electrode active material precursor according to any one of claim 1 to claim 8 and a lithium-containing raw material, and then firing the mixture at a temperature of 700 °C to lower than 830 °C, thereby obtaining a lithium transition metal oxide in the form of a single particle.

10. A positive electrode active material in the form of a single particle, which is prepared by the preparation method according to claim 9, and has an average particle diameter (D₅₀) of 3 um to 12 µm.

11. The positive electrode active material of claim 10, wherein the positive electrode active material is in the form of a single particle having an average particle diameter (D₅₀) of 4 um to 8 um.
